# EUROPEAN PATENT APPLICATION

(11) **EP 4 679 308 A1**
(43) Date of publication of application: **14.01.2026**
(21) Application number: 25184639.0
(22) Date of filing: 23.06.2025
(51) Int. Cl.: G06F 21/64, H04L 9/00

(54) **TAMPER-RESISTANT LOG VERIFICATION**

(30) Priority: 10.07.2024 US 202418769062
(71) Applicant: Microsoft Technology Licensing, LLC, Redmond, WA 98052-6399 (US)
(72) Inventor: Venkatesan, Ramarathnam, Redmond, WA, 98052 (US); Jakubowski, Mariusz H., Bellevue, WA, 98007 (US); Gupta, Kartik, 394510 Surat, GJ (IN); Bose, Subhra, Ossining, NY, 10562 (US); Stirpe, Paul Alan, Shoreham, NY, 11786 (US)
(74) Representative: Grünecker Patent- und Rechtsanwälte PartG mbB

(57) **Abstract**

Verification of a tamper-resistant log is disclosed herein. A storage provider maintains an append-only log storing a first log entry written by a first writer, the first log entry comprising first log data, a first signature and a first hash value. A verifier requests, from the storage provider, verification of the first log entry. The verifier obtains, from the storage provider, the first log entry and at least a portion of a second log entry preceding the first log entry to enable verification of the first log entry, wherein the second log entry comprises second log data, a second signature and a second hash value. The first log entry is verified based, at least in part, on the portion of the second log entry.

## Description

### BACKGROUND

A ledger, which is a log of financial transactions or other data, may be verified to ensure the accuracy, integrity, and consistency of log entries within the ledger. This provides a trustworthy audit trail, prevents fraud, ensures regulatory compliance, and/or enhances the overall reliability of the financial records or other data being managed. Ledger verification plays an important role in financial systems, blockchain networks, and other contexts where maintaining an unalterable and/or transparent transaction log is important.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems, methods, apparatuses, and computer program products are disclosed for verification of a tamper-resistant log. A storage provider maintains an append-only log storing a first log entry written by a first writer, the first log entry comprising first log data, a first signature and a first hash value. A verifier requests, from the storage provider, verification of the first log entry. The verifier obtains, from the storage provider, the first log entry and at least a portion of a second log entry preceding the first log entry to enable verification of the first log entry, wherein the second log entry comprises second log data, a second signature and a second hash value. The first log entry is verified based, at least in part, on the portion of the second log entry.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of an example system for writing a tamper-resistant entry to an append-only log, in accordance with an embodiment.
FIG. 2A shows a block diagram of an example system for verifying a tamper-resistant log using a public key, in accordance with an embodiment.
FIG. 2B shows a block diagram of an example system for verifying a tamper-resistant log using a private key, in accordance with an embodiment.
FIG. 2C shows a block diagram of an example system for verifying a tamper-resistant log using a zero-knowledge proof (ZKP), in accordance with an embodiment.
FIG. 3 depicts a flowchart of a process for verifying a tamper-resistant log, in accordance with an embodiment.
FIG. 4 depicts a flowchart of a process for performing a proof-of-storage protocol to verify storage of a tamper-resistant log, in accordance with an embodiment.
FIG. 5A depicts a flowchart of a process for writing a tamper-resistant log entry to an append-only log, in accordance with an embodiment.
FIG. 5B depicts a flowchart of a process for generating a tamper-resistant log entry, in accordance with an embodiment.
FIG. 6A depicts a flowchart of a process for verifying a tamper-resistant log using a public key, in accordance with an embodiment.
FIG. 6B depicts a flowchart of a process for verifying a tamper-resistant log using a private key, in accordance with an embodiment.
FIG. 6C depicts a flowchart of a process for verifying a tamper-resistant log using a ZKP, in accordance with an embodiment.
FIG. 6D depicts a flowchart of a process for verifying a tamper-resistant log using a message authentication code (MAC) protocol, in accordance with an embodiment.
FIG. 7 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

As used herein, a log is a data structure (e.g., a file, a table, an array) that contains a list of events that occur, such as transactions, errors, etc., in a computer system or other environment. A ledger is an example of a log. The term "append-only log" refers to a log where new events are appended as new entries at the end of the log, while earlier log entries remain unchanged.

As used herein, the term "hash function" refers to a mathematical function that takes an input and returns a hash value that is a fixed-size string of bytes uniquely representing the input. The term "hash value" refers to a fixed-size string of characters generated by a hash function from an input of arbitrary length that uniquely represents the input. "Hashing" refers to the application of a hash function to input data to generate an output hash value. In embodiments, hash functions include, but are not limited to, checksums (e.g., cyclic redundancy check (CRC), etc.), universal hash functions (e.g., rolling hash, etc.), non-cryptographic hash functions (e.g., FNV, Murmur, etc.), keyed cryptographic hash functions (e.g., MAC function, etc.), unkeyed cryptographic hash functions (e.g., MD5, SHA-1, SHA-2, etc.), and/or the like.

As used herein, the term "public key" refers to a cryptographic code designed to be openly shared and used in conjunction with a corresponding private key to enable anyone to verify digital signatures generated using the corresponding private key.

As used herein, the term "private key" refers a cryptographic code designed to be kept secret to enable the owner of the private key to generate digital signatures.

As used herein, the term "signature" refers to a cryptographic mechanism used to verify the authenticity and integrity of digital information associated with the signature.

As used herein, the term "zero-knowledge proof" relates to techniques in cryptography by which one party (the prover) can prove to another party (the verifier) that a given statement is true, while avoiding conveying to the verifier any information beyond the mere fact of the statement's truth.

### II. Example Embodiments

Ledger verification can be performed in various ways. For instance, hashing of ledger data and zero knowledge proofs of logging execution can be used to verify the correctness and integrity of ledger entries. However, attackers may bypass such one-time checks by tampering with the ledger after the verification concludes. To mitigate such attacks, periodic spot checks of ledger data may be performed using, for example, proofs of storage techniques geared towards ascertaining the integrity of cloud data. Variants of proof of storage (PoS) are also referred to as proofs of retrievability (PoR) or proofs of data possession.

Proof of Storage involves a customer challenging a storage provider with cryptographic proofs to verify that the storage provider is genuinely storing the data of the customer without needing to retrieve the entire dataset. The storage provider generates and returns proofs based on values derived from the stored customer data. If the proofs returned by the storage provider are correct, the customer can infer that the storage provider still possesses the customer data.

Common PoS techniques rely on calculating hash values for at least a portion of the customer data, and maintaining a set of the hash values for use in verification. Under such an approach, a verifier (e.g., customer and/or a trusted third party) maintain a set of hash values in order to carry out spot verification of customer data stored at the storage provider. Other PoS techniques involve inserting special signatures and/or patterns into the data stored at the storage provider, and querying the stored data for these special signatures and/or patterns during spot checks. While these PoS techniques eliminate the need for verifiers to maintain a set of hash values for verification purposes, the special signatures and/or patterns require extra storage on the server, and require, potentially, specialized data encoding to generate the special signatures and/or patterns.

Embodiments disclosed herein are directed to efficient verification of tamper-resistant logs without requiring a verifier to maintain a set of hash values. For instance, a storage provider maintains an append-only log on behalf of one or more writers, and provides a verification mechanism to enable on-demand verification of the append-only log, and/or portions thereof, by any entity, such as, but not limited to, the storage provider, one or more writers associated with the append-only log, and/or any third-party entity interested in the integrity of the append-only log. In embodiments, the maintained append-only log comprises a sequence of log entries that include a tuple comprising log data of the log entry, a signature, and a hash value, where the signature and the hash value are determined based on the log data and at least a portion of a preceding log entry in the append-only log. In embodiments, the first entry in the append-only log includes a tuple comprising a null entry for the log data, an empty signature, and a corresponding hash value (e.g., hash value based on the null entry and/or empty signature).

In embodiments, a writer generates a new log entry for the append-only log by calculating a new signature and a new hash value based on new log data associated with the new log entry and at least a portion of the last entry in the append-only log, and writing, to the append-only log, the new log entry as a tuple comprising new log data associated with the new log entry, the new signature, and the new hash value. In embodiments, the writer determines the new signature for the new log entry by signing, using a private key associated with the writer, a concatenation comprising the new log data and the hash value from the last entry in the append-only log, and determines the new hash value by hashing, using a predetermined (e.g., commonly-agreed upon) hash function, a concatenation comprising the new log data and the new signature. Alternatively, the writer, in embodiments, determines the new hash value by hashing, using the predetermined hash function, a concatenation comprising the new log data and the signature from the last entry in the append-only log, and determines the new signature for the new log entry by signing, using the private key associated with the writer, a concatenation comprising the new log data and the new hash value. In embodiments, the new signature comprises a message authentication code (MAC), also referred to as an authentication tag, that is generated according to a MAC protocol.

In embodiments, a verifier verifies the log entries by verifying the hash value and signature of the log entry. In embodiments, a verifier verifies the hash value of the log entry by hashing, using the predetermined hash function, a concatenation comprising the log data of the log entry being verified and the signature of the log entry being verified to obtain a hash result, and comparing the hash result to the hash value of the log entry being verified. Alternatively, a verifier, in embodiments, verifies the hash value of the log entry by hashing, using the predetermined hash function, a concatenation comprising the log data of the log entry being verified and the signature of the log entry in the append-only log preceding the log entry being verified to obtain a hash result, and comparing the hash result to the hash value of the log entry being verified.

Verification of the signature of the log entry may be performed in various ways. For instance, if a public key is associated with the writer of a log entry, anyone with access to the public key can verify a log entry by verifying the signature using the public key. In embodiments, a verifier verifies the signature of the log entry by decrypting, using the public key associated with the writer of the log entry, the signature of the log entry to obtain a decryption result, and comparing the decryption result to a concatenation comprising the log data of the log entry being verified and the hash value of the log entry in the append-only log preceding the log entry being verified. Alternatively, the verifier, in embodiments, verifies the signature of the log entry by comparing the decryption result to a concatenation comprising the log data of the log entry being verified and the hash value of the log entry being verified.

In example embodiments, when a public key is not available, verification of log entries may be performed by the writer of the log entry using their private key, or by a trusted third party with access to the private key. For instance, a verifier (e.g., writer or trusted third party), in embodiments, verifies the signature of the log entry by signing, using the private key associated with the writer, a concatenation comprising the log data of the log entry being verified and the hash value of the log entry in the append-only log preceding the log entry being verified to obtain a reference signature, and comparing the reference signature to the signature of the log entry being verified. Alternatively, the verifier, in embodiments, verifies the signature of the log entry by signing, using the private key associated with the writer, a concatenation comprising the log data of the log entry being verified and the hash value of the log entry being verified to obtain a reference signature, and comparing the reference signature to the signature of the log entry being verified.

In embodiments, a third-party verifier can verify a log entry of the append-only log without access to the private key associated with the writer of the log entry. For instance, the third-party verifier can employ an interactive zero-knowledge proof (ZKP) to verify execution of a verification process executed by the writer of the log entry. In embodiments, the third-party verifier retrieves the log entry being verified along with at least a portion of the log entry in the append-only log preceding the log entry being verified, generates a ZKP request that includes at least a portion of the retrieved information, and provides the ZKP request to the writer of the log entry being verified. The writer of the log entry, in embodiments, verifies the log entry based on their private key, generates a ZKP response based on the result of the verification of the log entry, and returns the ZKP response to the third-party verifier. The third-party verifier, in embodiments, verifies the integrity of the log entry by comparing the ZKP response received from the writer of the log entry to an expected ZKP response associated with the ZKP request. In embodiments, the third-party verifier can verify a portion (e.g., randomly selected, etc.) of the append-only log, and/or the entirety of the append-only log, by retrieving the log entries of interest, generating ZKP requests for the retrieved log entries, and providing the generated ZKP requests to the corresponding writers associated with the retrieved log entries, respectively.

In embodiments, a verifier employs the verification mechanism to verify that the storage provider is in actual possession of the entire append-only log using a proof-of-storage protocol. For instance, a verifier selects, based on the proof-of-storage protocol, a portion of the append-only log for verification. In embodiments, the selected portion is determined by the proof-of-storage protocol based on various factors, such as, but not limited to, the size of the append-only log, the frequency of proof-of-storage verification, a desired degree of certainty (e.g., probability, likelihood, etc.) that the storage provider is in actual possession of the entire append-only log, and/or the like. In embodiments, the selected portion includes, but is not limited to, a set of randomly selected log entries, a set of log entries that constitutes a predetermined share and/or percentage of the append-only log, a randomly selected block of consecutive log entries of the append-only log, and/or any combination thereof. In embodiments, the verifier obtains the log entries in the selected portion of the append-only log from the storage provider, and verifies the obtained log entries. In embodiments, the successful verification of the obtained log entries that constitute the selected portion of the append-only log indicates that the probability that the storage provider is in actual possession of the entire append-only log is at least a predetermined probability (e.g., 99%, etc.).

These and further embodiments enable the functionality described above and additional functionality. Such embodiments are described in further detail as follows.

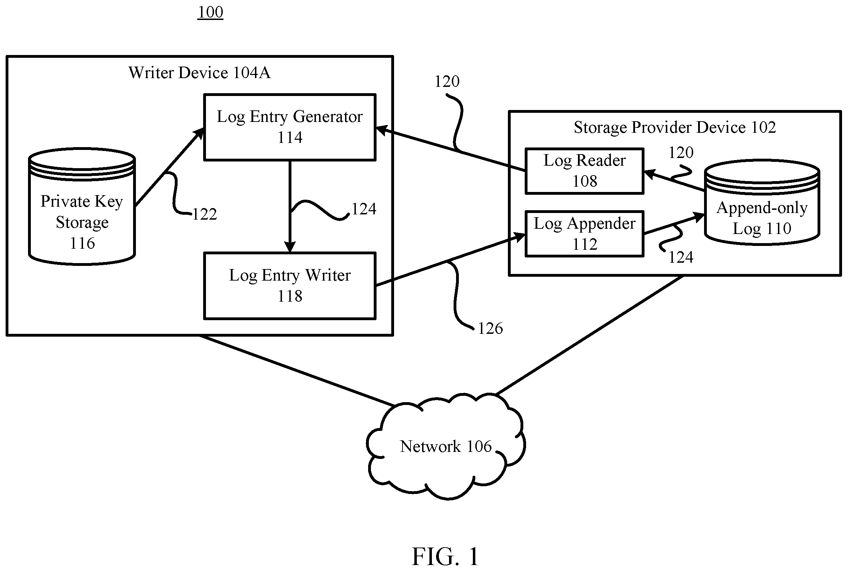

For example, FIG. 1 shows a block diagram of an example system 100 for writing a tamper-resistant entry to an append-only log, in accordance with an embodiment. As shown in FIG. 1, system 100 includes a storage provider device 102 communicatively coupled to a writer device 104A via a network 106. Storage provider device 102 further includes a log reader 108, an append-only log 110, and a log appender 112. Writer device 104A further includes a log entry generator 114, a private key storage 116, and a log entry writer 118. System 100 is described in further detail as follows.

Storage provider device 102 comprises any computing device or plurality of computing devices suitable for performing functions that are ascribed thereto in the following description, as will be appreciated by persons skilled in the relevant art(s), including those mentioned elsewhere herein or otherwise known. In embodiments, storage provider device 102 maintains append-only log 110 on behalf of one or more writers associated with writer device(s) 104A-104C. In embodiments, storage provider device 102 provides a verification mechanism to enable on-demand verification of append-only log 110, and/or portions thereof, by any entity, such as, but not limited to, a storage provider associated with storage provider device 102, one or more writers associated with writer device(s) 104A-104C, and/or any third-party entity. Various example implementations of storage provider device 102 are described below in reference to FIG. 9 (e.g., computing device 902, network-based server infrastructure 970, on-premises servers 992, and/or components thereof).

Writer device 104A comprises any computing device or plurality of computing devices suitable for performing functions that are ascribed thereto in the following description, as will be appreciated by persons skilled in the relevant art(s), including those mentioned elsewhere herein or otherwise known. In embodiments, writer device 104A is configured to generate a new log entry 124 based on at least a portion of the last entry 120 stored in append-only log 110, and to provide a write request 126 to storage provider device 102 to write new log entry 124 to append-only log 110. Various example implementations of writer device 104A are described below in reference to FIG. 9 (e.g., computing device 902, network-based server infrastructure 970, on-premises servers 992, and/or components thereof).

Network 106 comprises any computing device or plurality of computing devices suitable for performing functions that are ascribed thereto in the following description, as will be appreciated by persons skilled in the relevant art(s), including those mentioned elsewhere herein or otherwise known. In embodiments, network 106 is configured to enable communications between devices communicatively coupled thereto. Various example implementations of network 106 are described below in reference to FIG. 9 (e.g., network 904, and/or components thereof).

Log reader 108 is configured to read log entries from append-only log 110. In embodiments, log reader 108 receives requests from writer device(s) 104A-104C and/or verifier device(s) 202A-202B for one or more log entries, and returns, in response to the requests, the requested log entries.

Append-only log 110 is configured to store a sequence of log entries that include a tuple comprising log data of the log entry, a signature, and a hash value. In embodiments, the signature and/or hash value of the log entry is determined based at least in part on the signature and/or hash value associated with the preceding log entry in append-only log 110.

Log appender 112 is configured to add a new log entry to the end append-only log 110. In embodiments, log appender 112 receives write requests 126 from log entry writer 118 of writer device 104A, and writes, to append-only log 110, new log entry 124.

Log entry generator 114 is configured to generate a new log entry for writing to append-only log 110. In embodiments, log entry generator 114 generates new log entry 124 by retrieving at least a portion of the last entry 120 stored in append-only log 110, calculating a new signature and a new hash value based on new log data associated with the new log entry and at least a portion of the last entry 120, and transmitting, to log appender 112, write request 126 to write new log entry 124 to append-only log 110 as a tuple comprising new log data associated with new log entry 124, the new signature, and the new hash value. In embodiments, log entry generator 114 determines the new signature for the new log entry by signing, using a private key 122 associated with writer device 104A, a concatenation comprising the new log data and the hash value from last entry 120, and determines the new hash value by hashing, using a predetermined (e.g., commonly-agreed upon) hash function, a concatenation comprising the new log data and the new signature. Alternatively, log entry generator 114, in embodiments, determines the new hash value by hashing, using the predetermined hash function, a concatenation comprising the new log data and the signature from the last entry 120, and determines the new signature for the new log entry by signing, using private key 122, a concatenation comprising the new log data and the new hash value.

Private key storage 116 is configured to securely store one or more private keys associated with writer device 104A, such as, but not limited to, private key 122. While depicted as internal to writer device 104A, in embodiments, private key storage 116 is located at a location that is external and/or remote from writer device 104A.

Log entry writer 118 is configured to provide, to log appender 112, write request 126 to write new log entry 124 to the end of append-only log 110. In embodiments, log entry writer 118 receives new log entry 124 from log entry generator 114 as a tuple comprising new log data associated with new log entry 124, a new signature, and a new hash value, and generates write request 126 based on new log entry 124.

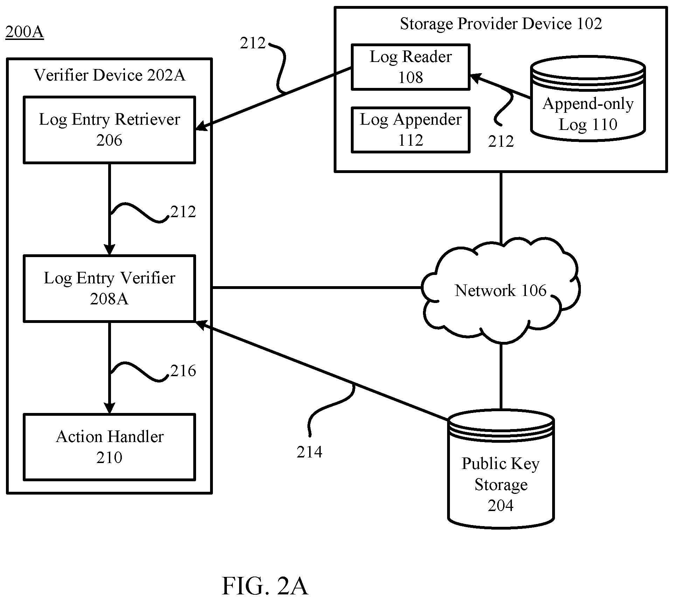

Embodiments described herein may operate in various ways to verify a tamper-resistant log using a public key. For instance, FIG. 2A shows a block diagram of an example system 200A for verifying a tamper-resistant log using a public key, in accordance with an embodiment. As shown in FIG. 2A, system 200A includes a verifier device 202A that is communicatively coupled, via network 106, to storage provider device 102, and a public key storage 204. Verifier device 202A further includes a log entry retriever 206, a log entry verifier 208A, and an action handler 210. System 200A is described in further detail as follows.

Verifier device 202A comprises any computing device or plurality of computing devices suitable for performing functions that are ascribed thereto in the following description, as will be appreciated by persons skilled in the relevant art(s), including those mentioned elsewhere herein or otherwise known. In embodiments, verifier device 202A is configured to verify a log entry 212 stored in append-only log 110 based at least on a public key 214 associated with the writer of log entry 212. In embodiments, verifier device 202A is implemented on the same device as one or more of writer device(s) 104A-104C and/or verifier device 202B. Various example implementations of verifier device 202A are described below in reference to FIG. 9 (e.g., computing device 902, network-based server infrastructure 970, on-premises servers 992, and/or components thereof).

Public key storage 204 is configured to store public keys associated with writers of log entries stored in append-only log 110, including, but not limited to, public key 214. In embodiments, public key storage 204 is a centralized or decentralized database that is maintained by one or more entities, such as, but not limited to, a certificate authority, a storage provider associated with storage provider device 102, a third-party entity, and/or an independent entity. In embodiments, public key storage 204 stores public keys using a blockchain and/or distributed ledger. While depicted as external to storage provider device 102, in embodiments, public key storage 204 is implemented on the same computing device(s) as storage provider device 102.

Log entry retriever 206 is configured to retrieve, from log reader 108, one or more log entries stored in append-only log 110, including, but not limited to, a log entry being verified, a range of log entries being verified, a log entry preceding a log entry being verified, all log entries stored in append-only log 110, and/or any portions thereof. In embodiments, log entry retriever 206 selects log entry 212 to retrieve from log reader 108 in various ways, including, but not limited to, randomly, based on user input, based on an alert, and/or any combination thereof. In embodiments, log entry retriever 206 requests log entry 212 from log reader 108 in various ways, including, but not limited to, automatically, semi-automatically, manually, periodically, based on user input, based on an alert, and/or any combination thereof. In embodiments, log entry retriever 206 provides the log entry 212 to log entry verifier 208A for verification.

Log entry verifier 208A is configured to verify log entry 212 by verifying the hash value and signature of log entry 212. In embodiments, log entry verifier 208A verifies the hash value of log entry 212 by hashing, using the predetermined hash function, a concatenation comprising the log data of log entry 212 and the signature of log entry 212 to obtain a hash result, and comparing the hash result to the hash value associated log entry 212. Alternatively, log entry verifier 208A, in embodiments, verifies the hash value of log entry 212 by hashing, using the predetermined hash function, a concatenation comprising the log data of log entry 212 and the signature of the log entry preceding log entry 212 to obtain a hash result, and comparing the hash result to the hash value associated log entry 212. In embodiments, log entry verifier 208A verifies the signature of log entry 212 based on the log data of log entry 212, the signature of log entry 212, and a public key associated with the writer of log entry 212. In embodiments, log entry verifier 208A is implemented as a verification function that accepts, as input, log entry 212, and/or the log entry in append-only log 110 preceding log entry 212, and public key 214, and returns, as an output, verification result 216. In embodiments, ZKP verifier 224 verifies ZKP response 228 by comparing ZKP response 228 to an expected verification result. In embodiments, log entry verifier 208A verifies the signature of log entry 212 by decrypting, using public key 214, the signature of log entry 212 to obtain a decryption result, and comparing the decryption result to a concatenation comprising the log data of log entry 212 and the hash value of the log entry preceding log entry 212. Alternatively, log entry verifier 208A, in embodiments, verifies the signature of log entry 212 by comparing the decryption result to a concatenation comprising the log data of log entry 212 and the hash value of log entry 212. In embodiments, log entry verifier 208A provides, to action handler 210, a verification result 216.

Action handler 210 is configured to receive a verification result 216, and to perform an action responsive thereto, such as, but not limited to, generating a report comprising the verification result, alerting a user, initiating an audit of append-only log 110, increasing monitoring of append-only log 110, preventing deletion of data associated with append-only log 110, performing root cause analysis of a failed verification, determining a last valid state of append-only log 110, and/or any combination thereof.

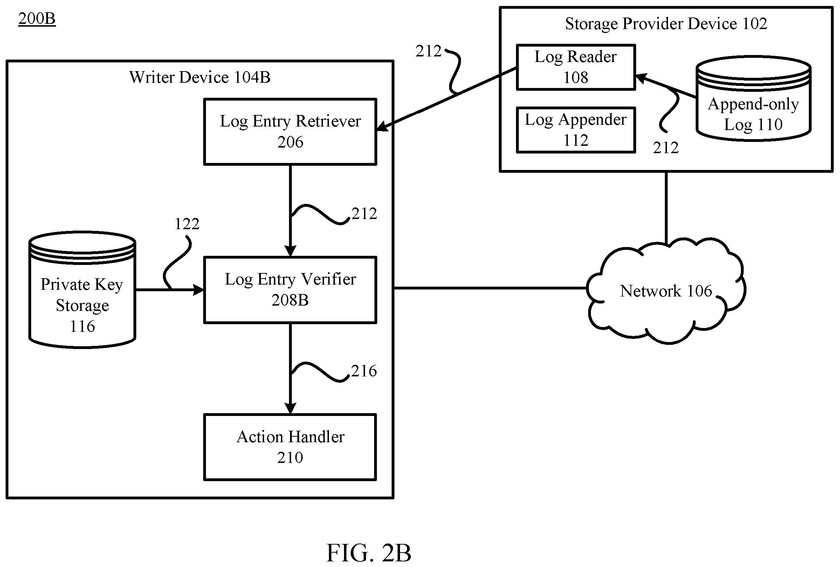

Embodiments described herein may operate in various ways to verify a tamper-resistant log using a private key. For instance, FIG. 2B shows a block diagram of an example system 200B for verifying a tamper-resistant log using a private key, in accordance with an embodiment. As shown in FIG. 2B, system 200B includes storage provider device 102 communicatively coupled to a writer device 104B, via network 106. Writer device 104B includes private key storage 116, log entry retriever 206, a log entry verifier 208B, and action handler 210. System 200B is described in further detail as follows.

Writer device 104B comprises any computing device or plurality of computing devices suitable for performing functions that are ascribed thereto in the following description, as will be appreciated by persons skilled in the relevant art(s), including those mentioned elsewhere herein or otherwise known. In embodiments, writer device 104B is configured to verify a log entry 212 stored in append-only log 110 based at least on private key 122 associated with the writer of log entry 212. In embodiments, verifier device 104B is implemented on the same device as one or more of writer device(s) 104A, 104C, and/or verifier device(s) 202A-202B. Various example implementations of writer device 104B are described below in reference to FIG. 9 (e.g., computing device 902, network-based server infrastructure 970, on-premises servers 992, and/or components thereof).

Log entry verifier 208B is configured to verify log entry 212 by verifying the hash value and signature of log entry 212. In embodiments, log entry verifier 208B verifies the hash value of log entry 212 by hashing, using the predetermined hash function, a concatenation comprising the log data of log entry 212 and the signature of log entry 212 to obtain a hash result, and comparing the hash result to the hash value associated log entry 212. Alternatively, log entry verifier 208B, in embodiments, verifies the hash value of log entry 212 by hashing, using the predetermined hash function, a concatenation comprising the log data of log entry 212 and the signature of the log entry preceding log entry 212 to obtain a hash result, and comparing the hash result to the hash value associated log entry 212. In embodiments, log entry verifier 208A verifies the signature of log entry 212 by signing, using private key 122, a concatenation comprising the log data of log entry 212 and the hash value of the log entry in the append-only log preceding log entry 212 to obtain a reference signature, and comparing the reference signature to the signature of log entry 212. Alternatively, log entry verifier 208B, in embodiments, verifies the signature of log entry 212 by signing, using private key 122, a concatenation comprising the log data of log entry 212 and the hash value of log entry 212 to obtain a reference signature, and comparing the reference signature to the signature of log entry 212. In embodiments, log entry verifier 208B outputs a verification result 216.

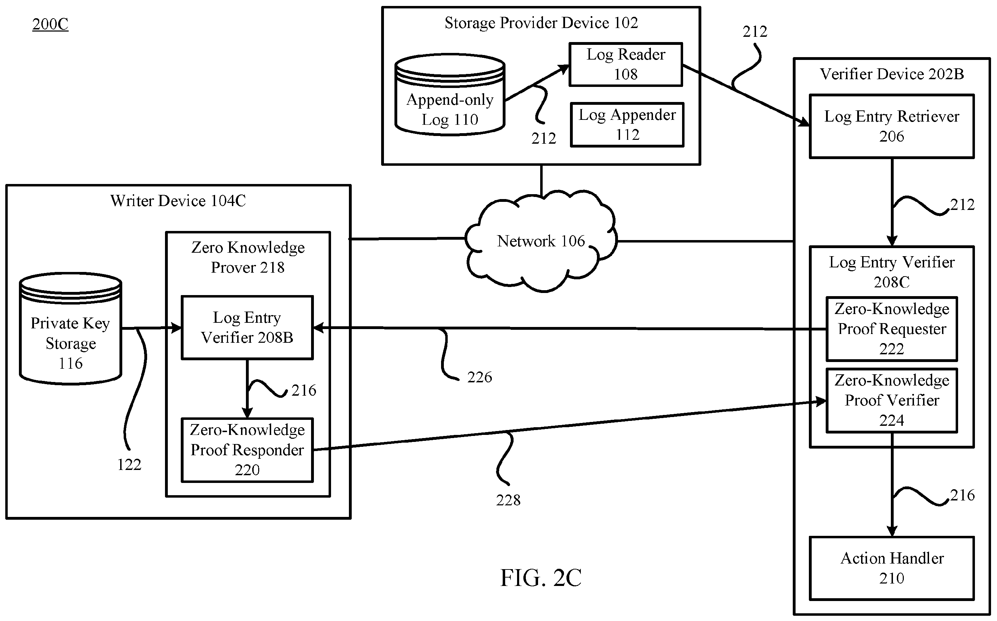

Embodiments described herein may operate in various ways to verify a tamper-resistant log using a ZKP. For instance, FIG. 2C shows a block diagram of an example system 200C for verifying a tamper-resistant log using a ZKP, in accordance with an embodiment. As shown in FIG. 2C, system 200C includes a verifier device 202B that is communicatively coupled, via network 106, to storage provider device 102, and a writer device 104C. Writer device 104C includes private key storage 116, and a zero-knowledge prover 218 that includes log entry verifier 208B, and a ZKP responder 220. Verifier device 202B includes log entry retriever 206, a log entry verifier 208C, and an action handler 210. Log entry verifier 208C further includes a ZKP requester 222, and a ZKP verifier 224. System 200C is described in further detail as follows.

Verifier device 202B comprises any computing device or plurality of computing devices suitable for performing functions that are ascribed thereto in the following description, as will be appreciated by persons skilled in the relevant art(s), including those mentioned elsewhere herein or otherwise known. In embodiments, verifier device 202B is configured to verify a log entry 212 stored in append-only log 110 by performing an interactive ZKP with writer device 104C of log entry 212. In embodiments, verifier device 202B is controlled by any entity, such as, but not limited to, a writer associated with append-only log 110, storage provider associated with append-only log 110, and/or any other entity interested in verifying the integrity of append-only log 110. In embodiments, verifier device 202B is implemented on the same device as one or more of writer device(s) 104A-104C and/or verifier device 202A. Various example implementations of verifier device 202B are described below in reference to FIG. 9 (e.g., computing device 902, network-based server infrastructure 970, on-premises servers 992, and/or components thereof).

Writer device 104C comprises any computing device or plurality of computing devices suitable for performing functions that are ascribed thereto in the following description, as will be appreciated by persons skilled in the relevant art(s), including those mentioned elsewhere herein or otherwise known. In embodiments, writer device 104C is configured to receive, from ZKP requester 222, a ZKP request 226 to verify log entry 212, and verify log entry 212 based at least on private key 122. In embodiments, verifier device 104B is implemented on the same device as one or more of writer device(s) 104B, 104C, and/or verifier device(s) 202A-202B. Various example implementations of writer device 104C are described below in reference to FIG. 9 (e.g., computing device 902, network-based server infrastructure 970, on-premises servers 992, and/or components thereof).

ZKP prover 218 is configured to generate a ZKP based on ZKP request 226 by verifying log entry 212 based on a MAC protocol. For instance, ZKP prover 218 generates a ZKP response 228 based on log entry 212, at least a portion of the log entry preceding log entry 212, and private key 122.

ZKP responder 220 is configured to receive verification result 216 from log entry verifier 208B, generate ZKP response 228 based on verification result 216, and provide ZKP response 228 to ZKP verifier 224.

Log entry verifier 208C is configured to verify log entry 212 by performing an interactive ZKP with writer device 104C of log entry 212 to verify execution of a verification process executed by writer device 104C to verify log entry 212. In embodiments, the third-party verifier can verify a portion (e.g., randomly selected, etc.) of append-only log 110, and/or the entirety of append-only log 110, by retrieving the log entries 212 of interest, generating ZKP requests 226 for the retrieved log entries 212, and providing the generated ZKP requests 226 to the corresponding writer device(s) 104C associated with the retrieved log entries 212, respectively.

ZKP requester 222 is configured to receive, from log entry retriever 206, log entry 212 along with at least a portion of the log entry in the append-only log preceding log entry 212, generate ZKP request 226 that includes at least a portion of the log entry 212 and/or the log entry in append-only log 110 preceding log entry 212, and provide ZKP request 226 to writer device 104C for verification.

ZKP verifier 224 is configured to receive, from ZKP responder 220, ZKP response 228, and verify the integrity of log entry 212 by verifying ZKP response 228. In embodiments, ZKP verifier 224 is a verification function that accepts, as input, ZKP response 228, log entry 212, and/or the log entry in append-only log 110 preceding log entry 212, and returns, as an output, verification result 216. In embodiments, ZKP verifier 224 verifies ZKP response 228 by comparing ZKP response 228 to an expected verification result. In embodiments, ZKP verifier 224 provides, to action handler 210, a verification result 216.

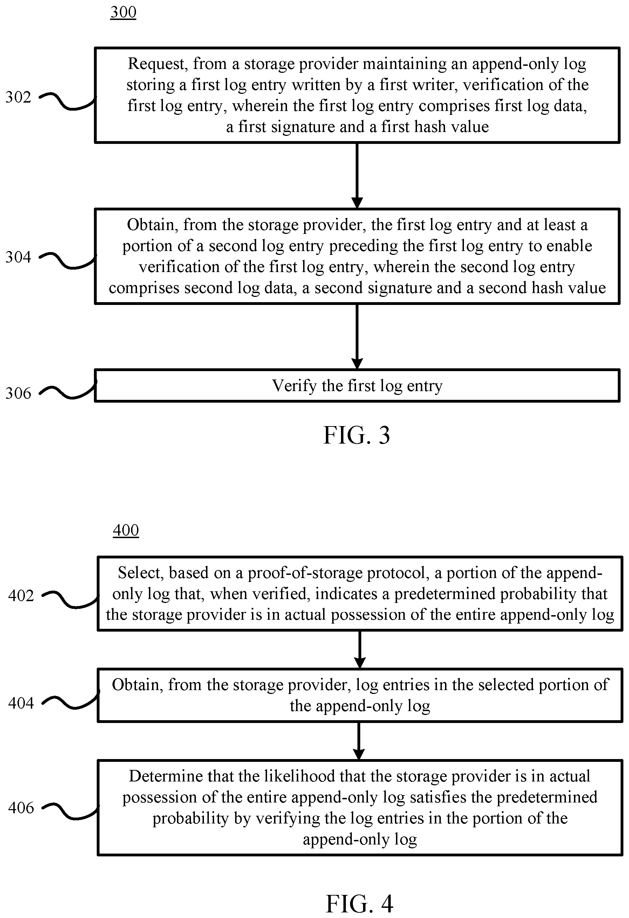

Embodiments described herein may operate in various ways to verify a tamper-resistant log. For instance, FIG. 3 depicts a flowchart of a process 300 for verifying a tamper-resistant log, in accordance with an embodiment. Storage provider device 102, writer device(s) 104A-104C, verifier device(s) 202A-202C, and/or components thereof, may, for example, operate according to flowchart 300. Flowchart 300 is described as follows with respect to FIGS. 2A-2C for illustrative purposes.

Flowchart 300 starts at step 302. In step 302, verification of a first log entry is requested from a storage provider maintaining an append-only log storing a first log entry written by a first writer, wherein the first log entry comprises first log data, a first signature and a first hash value. For instance, verification of log entry 212 is requested from service provider device 102 that maintains append-only log 110 that includes log entry 212. In embodiments, verification of log entry 212 is initiated on-demand by any entity, such as, but not limited to, storage provider device 102, verifier device(s) 202A-202B, and/or writer device(s) 104A-104C.

In step 304, the first log entry and at least a portion of a second log entry preceding the first log entry are obtained from the storage provider to enable verification of the first log entry, wherein the second log entry comprises second log data, a second signature and a second hash value. For example, log entry retriever 106 obtains, from log reader 103 of storage provider device 102, log entry 212 and at least a portion of the log entry in append-only log 110 that precedes log entry 212.

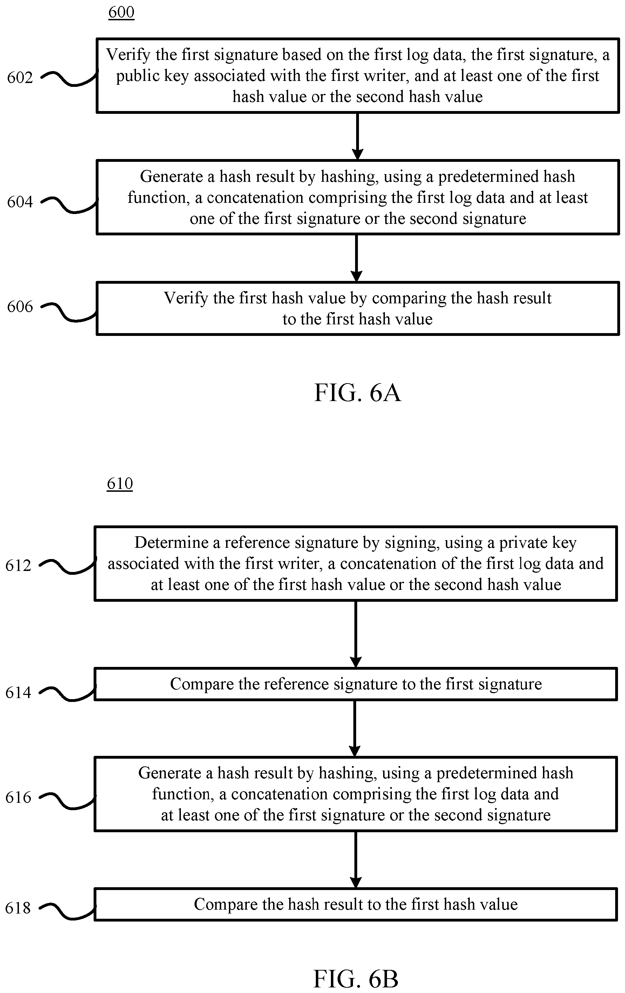

In step 306, the first log entry is verified. For instance, log entry 212 is verified by at least one of storage provider device 102, writer device 104B, and/or verifier device(s) 202A-202B according to one or more verification processes that will be described in greater detail below in conjunction with FIGS. 6A-6D.

Embodiments described herein may operate in various ways to write a tamper-resistant entry to an append-only log. For instance, FIG. 4 depicts a flowchart of a process 400 for writing a tamper-resistant entry to an append-only log, in accordance with an embodiment. Writer device(s) 104A-104C, verifier device(s) 202A-202C, and/or components thereof, may, for example, operate according to flowchart 400. Flowchart 400 is described as follows with respect to FIGS. 1-2C for illustrative purposes.

Flowchart 400 starts at step 402. In step 402, a portion of the append-only log is selected based on a proof-of-storage protocol, the verification of the selected portion of the append-only log indicating a predetermined probability that the storage provider is in actual possession of the entire append-only log. For example, at least one of verifier device(s) 202A-202B and/or writer device(s) 104A-104C selects, based on a proof-of-storage protocol a portion of append-only log 110 to verify. In embodiments, the portion of append-only log 110 is selected based on at least one of: a percentage determined according to the proof-of-storage protocol, a random selection process, and/or the like. In embodiments, the selected portion of append-only log 110 includes, but is not limited to, a set of randomly selected log entries, a set of log entries that constitutes a predetermined share and/or percentage of append-only log 110, a randomly selected block of consecutive log entries of append-only log 110, and/or any combination thereof.

In step 404, log entries in the portion of the append-only log is obtained from the storage provider. For example, log entry retriever 106 obtains, from log reader 103 of storage provider device 102, log entries 212 that constitute the selected portion of append-only log 110, and at least a portion of the log entries in append-only log 110 that precede log entries 212.

In step 406, the likelihood that the storage provider is in actual possession of the entire append-only log is determined to satisfy the predetermined probability by verifying the log entries in the portion of the append-only log. For instance, log entries 212 are verified by at least one of storage provider device 102, writer device 104B, and/or verifier device(s) 202A-202B according to one or more verification processes that will be described in greater detail below in conjunction with FIGS. 6A-6D.

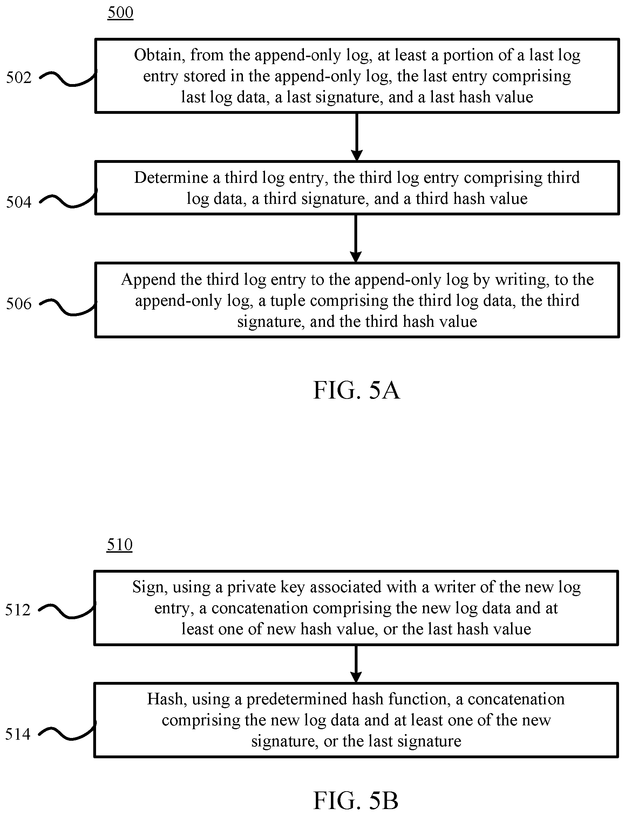

Embodiments described herein may operate in various ways to write a tamper-resistant entry to an append-only log. For instance, FIG. 5A depicts a flowchart of a process 500 for writing a tamper-resistant entry to an append-only log, in accordance with an embodiment. Writer device 104A, log entry generator 114, private key storage 116, and/or log entry writer 118 may, for example, operate according to flowchart 500. Note that not all steps of flowchart 500 may need to be performed in all embodiments, and in some embodiments, the steps of flowchart 500 may be performed in different orders than shown. Flowchart 500 is described as follows with respect to FIG. 1 for illustrative purposes.

Flowchart 500 starts at step 502. In step 502, at least a portion of a last entry is obtained from an append-only log, the last entry comprising last log data, a last signature, and a last hash value. For example, log entry generator 114 obtains, from append-only log 110, at least a portion of last entry 120.

In step 504, a third log entry is determined, the third log entry comprising third log data, a third signature, and a third hash value. For example, log entry generator 114, in embodiments, determines the new signature for new log entry 124 by signing, using private key 122 associated with writer device 104A, a concatenation comprising new log data and the hash value from last entry 120, and determines the new hash value by hashing, using a predetermined hash function, a concatenation comprising the new log data and the new signature. Alternatively, log entry generator 114, in embodiments, determines the new hash value by hashing, using the predetermined hash function, a concatenation comprising the new log data and the signature from the last entry 120, and determines the new signature for the new log entry by signing, using private key 122, a concatenation comprising the new log data and the new hash value.

In step 506, the third log entry is appended to the append-only log by writing, to the append-only log, a tuple comprising the third log data, the third signature, and the third hash value. For example, log entry writer 118 generates and provides a write request 126 to log appender 112 to add new log entry 124 to the end of append-only log 110.

Embodiments described herein may operate in various ways to generate a signature and hash value for a new log entry. For instance, FIG. 5B depicts a flowchart of a process 510 for generating a signature and hash value for a new log entry, in accordance with an embodiment. Writer device 104A, log entry generator 114, private key storage 116, and/or log entry writer 118 may, for example, operate according to flowchart 510. Note that not all steps of flowchart 510 may need to be performed in all embodiments, and in some embodiments, the steps of flowchart 510 may be performed in different orders than shown. Flowchart 510 is described as follows with respect to FIG. 1 for illustrative purposes.

Flowchart 510 starts at step 512. In step 512, the new signature is generated for a new log entry by signing, using a private key associated with a writer of the new log entry, a concatenation comprising the new log data and at least one of new hash value, or the last hash value. For example, log entry generator 114 determines the new signature for new log entry 124 by signing, using private key 122 associated with writer device 104A, a concatenation comprising new log data and the hash value from last entry 120, or a concatenation comprising the new log data and the new hash value.

In step 514, the new hash value is generated for the new log entry by hashing, using a predetermined hash function, a concatenation comprising the new log data and at least one of the new signature, or the last signature. For example, log entry generator 114 determines the new hash value by hashing, using a predetermined hash function, a concatenation comprising the new log data and the new signature, or a concatenation comprising the new log data and the signature from the last entry 120.

Embodiments described herein may operate in various ways to verify a tamper-resistant log using a public key. For instance, FIG. 6A depicts a flowchart of a process 600 for verifying a tamper-resistant log using a public key, in accordance with an embodiment. Verifier device(s) 202A-202B, log entry retriever 206, log entry verifier 208A, and/or action handler 210 may, for example, operate according to flowchart 600. Note that not all steps of flowchart 600 may need to be performed in all embodiments, and in some embodiments, the steps of flowchart 600 may be performed in different orders than shown. Flowchart 600 is described as follows with respect to FIG. 2A for illustrative purposes.

Flowchart 600 starts at step 602. In step 602, the first signature is verified based on the first log data, the first signature, a public key associated with the first writer, and at least one of the first hash value or the second hash value. For example, log entry verifier 208A verifies log entry 212 based on data associated with log entry 212, a signature associated with log entry 212 and public key 214. In embodiments, log entry verifier 208A is a verification function that accepts, as input, log entry 212, at least a portion of the log entry in append-only log 110 preceding log entry 212, and public key 214, and returns, as an output, verification result 216.

In step 604, a hash result is generated by hashing, using the predetermined hash function, a concatenation comprising the first log data and at least one of the first signature, or the second signature. For example, log entry verifier 208A generates a hash result by hashing, using the predetermined hash function, a concatenation comprising the log data of log entry 212 and the signature of log entry 212, or a concatenation comprising the log data of log entry 212 and the signature of the log entry in append-only log 110 preceding log entry 212.

In step 606, the first hash value is verified by comparing hash result to the first hash value. For example, log entry verifier 208A verifies the hash value of log entry 212 by comparing the hash result to the hash value of log entry 212.

Embodiments described herein may operate in various ways to verify a tamper-resistant log using a private key. For instance, FIG. 6B depicts a flowchart of a process 610 for verifying a tamper-resistant log using a private key, in accordance with an embodiment. Writer device 104B, private key storage 116, log entry retriever 206, log entry verifier 208B, and/or action handler 210 may, for example, operate according to flowchart 610. Note that not all steps of flowchart 610 may need to be performed in all embodiments, and in some embodiments, the steps of flowchart 610 may be performed in different orders than shown. Flowchart 610 is described as follows with respect to FIG. 2B for illustrative purposes.

Flowchart 610 starts at step 612. In step 612, a reference signature is determined by signing, using a private key associated with the first writer, a concatenation comprising the first log data and at least one of the first hash value or the second hash value. For example, log entry verifier 208B determines a reference signature by signing, using private key 122, a concatenation comprising the log data of log entry 212 and the hash value of log entry 212, or a concatenation comprising the log data of log entry 212 and the hash value of the log entry in append-only log 110 preceding log entry 212.

In step 614, the reference signature is compared to the first signature. For example, log entry verifier 208B compares the reference signature to the signature of log entry 212.

In step 616, a hash result is generated by hashing, using the predetermined hash function, a concatenation comprising the first log data and at least one of the first signature or the second signature. For example, log entry verifier 208B generates a hash result by hashing, using the predetermined hash function, a concatenation comprising the log data of log entry 212 and the signature of log entry 212, or a concatenation comprising the log data of log entry 212 and the signature of the log entry in append-only log 110 preceding log entry 212.

In step 618, the hash result is compared to the first hash value. For example, log entry verifier 208B compares the hash result to the hash value of log entry 212.

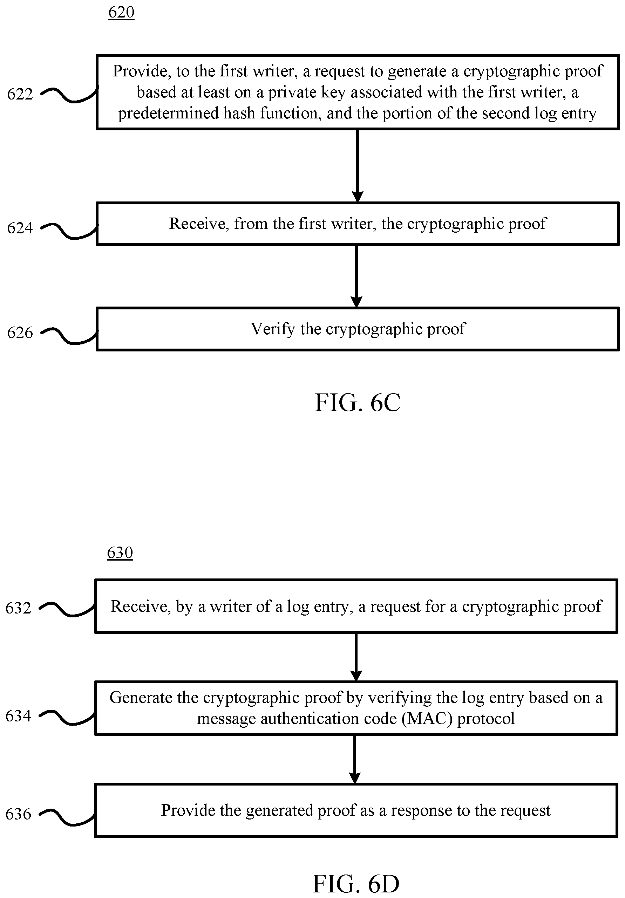

Embodiments described herein may operate in various ways to verify a tamper-resistant log. For instance, FIG. 6C depicts a flowchart of a process 620 for verifying a tamper-resistant log, in accordance with an embodiment. Verifier device 202B, log entry retriever 206, log entry verifier 208C, action handler 210, zero-knowledge requester 222, and/or zero-knowledge verifier 224 may, for example, operate according to flowchart 620. Note that not all steps of flowchart 620 may need to be performed in all embodiments, and in some embodiments, the steps of flowchart 620 may be performed in different orders than shown. Flowchart 620 is described as follows with respect to FIG. 2C for illustrative purposes.

Flowchart 620 starts at step 622. In step 622, a request is provided to the first writer to generate a cryptographic proof based at least on a private key associated with the first writer, the predetermined hash function, and the portion of the second log entry. For example, ZKP requester 222 provides ZKP request 226 to writer device 104C to generate ZKP response 228 by verifying log entry 212.

In step 624, a cryptographic proof is received from the first writer. For example, ZKP verifier 224 receives ZKP response 228 from ZKP responder 220.

In step 626, the cryptographic proof is verified. For example, ZKP verifier 224 verifies ZKP response 228 to verify log entry 212.

Embodiments described herein may operate in various ways to verify a tamper-resistant log using a message authentication code (MAC) protocol. For instance, FIG. 6D depicts a flowchart of a process 630 for verifying a tamper-resistant log using a MAC protocol, in accordance with an embodiment. Writer device 104C, private key storage 116, log entry verifier 208B, and/or zero-knowledge responder 220 may, for example, operate according to flowchart 630. Note that not all steps of flowchart 630 may need to be performed in all embodiments, and in some embodiments, the steps of flowchart 630 may be performed in different orders than shown. Flowchart 630 is described as follows with respect to FIG. 2C for illustrative purposes.

Flowchart 630 starts at step 632. In step 632, a cryptographic request to generate a cryptographic proof is received by a writer of a log entry. For example, ZKP prover 218 receives ZKP request 226 from ZKP requester 222.

In step 634, the writer of the log entry generates a cryptographic proof by verifying the log entry based on a MAC protocol. For example, in response to ZKP request 226, log verifier 208B of writer device 104C verifies log entry 212 based on a MAC protocol.

In step 636, responsive to verifying the log entry, the writer of the log entry provides a ZKP response to the ZKP request. For example, ZKP responder 220 generates ZKP response 228 based on verification result 216, and provides ZKP response 228 to ZKP verifier 224.

### III. Example Mobile Device and Computer System Implementation

Storage provider device 102, writer device(s) 104A-104C, network 106, log reader 108, append-only log 110, log appender 112, log entry generator 114, private key storage 116, log entry writer 118, verifier device(s) 202A-202B, public key storage 204, log entry retriever 206, log entry verifier(s) 208A-208C, action handler 210, ZKP prover 218, ZKP responder 220, ZKP requester 222, ZKP verifier 224, and/or the components described therein, and/or the steps of flowcharts 300, 400, 500, 510, 600, 610, 620, and/or 630 are implemented in hardware, or hardware combined with one or both of software and/or firmware. For example, storage provider device 102, writer device(s) 104A-104C, network 106, log reader 108, append-only log 110, log appender 112, log entry generator 114, private key storage 116, log entry writer 118, verifier device(s) 202A-202B, public key storage 204, log entry retriever 206, log entry verifier(s) 208A-208C, action handler 210, ZKP prover 218, ZKP responder 220, ZKP requester 222, ZKP verifier 224, and/or the components described therein, and/or the steps of flowcharts 300, 400, 500, 510, 600, 610, 620, and/or 630 are each implemented as computer program code/instructions configured to be executed in one or more processors and stored in a computer readable storage medium. Alternatively, storage provider device 102, writer device(s) 104A-104C, network 106, log reader 108, append-only log 110, log appender 112, log entry generator 114, private key storage 116, log entry writer 118, verifier device(s) 202A-202B, public key storage 204, log entry retriever 206, log entry verifier(s) 208A-208C, action handler 210, ZKP prover 218, ZKP responder 220, ZKP requester 222, ZKP verifier 224, and/or the components described therein, and/or the steps of flowcharts 300, 400, 500, 510, 600, 610, 620, and/or 630 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

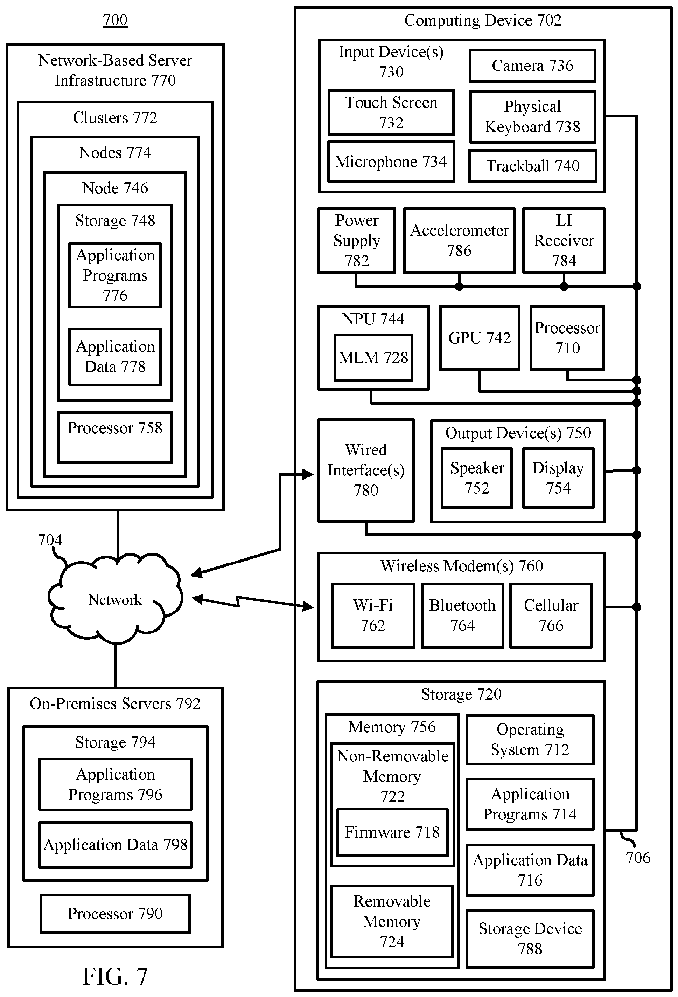

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 7. FIG. 7 shows a block diagram of an exemplary computing environment 700 that includes a computing device 702. Computing device 702 is an example of storage provider device 102, writer device(s) 104A-104C, and/or verifier device(s) 202A-202B, which each include one or more of the components of computing device 702. In some embodiments, computing device 702 is communicatively coupled with devices (not shown in FIG. 7) external to computing environment 700 via network 704. Network 704 comprises one or more networks such as local area networks (LANs), wide area networks (WANs), enterprise networks, the Internet, etc. In examples, network 704 includes one or more wired and/or wireless portions. In some examples, network 704 additionally or alternatively includes a cellular network for cellular communications. Computing device 702 is described in detail as follows.

Computing device 702 can be any of a variety of types of computing devices. Examples of computing device 702 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 702 is a stationary computing device such as a desktop computer, a personal computer (PC), a stationary server device, a minicomputer, a mainframe, a supercomputer, etc.

As shown in FIG. 7, computing device 702 includes a variety of hardware and software components, including a processor 710, a storage 720, a graphics processing unit (GPU) 742, a neural processing unit (NPU) 744, one or more input devices 730, one or more output devices 750, one or more wireless modems 760, one or more wired interfaces 780, a power supply 782, a location information (LI) receiver 784, and an accelerometer 786. Storage 720 includes memory 756, which includes non-removable memory 722 and removable memory 724, and a storage device 788. Storage 720 also stores an operating system 712, application programs 714, and application data 716. Wireless modem(s) 760 include a Wi-Fi modem 762, a Bluetooth modem 764, and a cellular modem 766. Output device(s) 750 includes a speaker 752 and a display 754. Input device(s) 730 includes a touch screen 732, a microphone 734, a camera 736, a physical keyboard 738, and a trackball 740. Not all components of computing device 702 shown in FIG. 7 are present in all embodiments, additional components not shown may be present, and in a particular embodiment any combination of the components are present. In examples, components of computing device 702 are mounted to a circuit card (e.g., a motherboard) of computing device 702, integrated in a housing of computing device 702, or otherwise included in computing device 702. The components of computing device 702 are described as follows.

In embodiments, a single processor 710 (e.g., central processing unit (CPU), microcontroller, a microprocessor, signal processor, ASIC (application specific integrated circuit), and/or other physical hardware processor circuit) or multiple processors 710 are present in computing device 702 for performing such tasks as program execution, signal coding, data processing, input/output processing, power control, and/or other functions. In examples, processor 710 is a single-core or multi-core processor, and each processor core is single-threaded or multithreaded (to provide multiple threads of execution concurrently). Processor 710 is configured to execute program code stored in a computer readable medium, such as program code of operating system 712 and application programs 714 stored in storage 720. The program code is structured to cause processor 710 to perform operations, including the processes/methods disclosed herein. Operating system 712 controls the allocation and usage of the components of computing device 702 and provides support for one or more application programs 714 (also referred to as "applications" or "apps"). In examples, application programs 714 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 710 includes one or more general processors (e.g., CPUs) configured with or coupled to one or more hardware accelerators, such as one or more NPUs 744 and/or one or more GPUs 742.

Any component in computing device 702 can communicate with any other component according to function, although not all connections are shown for ease of illustration. For instance, as shown in FIG. 7, bus 706 is a multiple signal line communication medium (e.g., conductive traces in silicon, metal traces along a motherboard, wires, etc.) present to communicatively couple processor 710 to various other components of computing device 702, although in other embodiments, an alternative bus, further buses, and/or one or more individual signal lines is/are present to communicatively couple components. Bus 706 represents one or more of any of several types of bus structures, including a memory bus or memory controller, a peripheral bus, an accelerated graphics port, and a processor or local bus using any of a variety of bus architectures.

Storage 720 is physical storage that includes one or both of memory 756 and storage device 788, which store operating system 712, application programs 714, and application data 716 according to any distribution. Non-removable memory 722 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 722 includes main memory and is separate from or fabricated in a same integrated circuit as processor 710. As shown in FIG. 7, non-removable memory 722 stores firmware 718 that is present to provide low-level control of hardware. Examples of firmware 718 include BIOS (Basic Input/Output System, such as on personal computers) and boot firmware (e.g., on smart phones). In examples, removable memory 724 is inserted into a receptacle of or is otherwise coupled to computing device 702 and can be removed by a user from computing device 702. Removable memory 724 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 788 are present that are internal and/or external to a housing of computing device 702 and are or are not removable. Examples of storage device 788 include a hard disk drive, a SSD, a thumb drive (e.g., a USB (Universal Serial Bus) flash drive), or other physical storage device.

One or more programs are stored in storage 720. Such programs include operating system 712, one or more application programs 714, and other program modules and program data. Examples of such application programs include computer program logic (e.g., computer program code/instructions) for implementing storage provider device 102, writer device(s) 104A-104C, network 106, log reader 108, append-only log 110, log appender 112, log entry generator 114, private key storage 116, log entry writer 118, verifier device(s) 202A-202B, public key storage 204, log entry retriever 206, log entry verifier(s) 208A-208C, action handler 210, ZKP prover 218, ZKP responder 220, ZKP requester 222, ZKP verifier 224, and/or each of the components described therein, as well as any of flowcharts 300, 400, 500, 510, 600, 610, 620, 630, and/or any individual steps thereof.

Storage 720 also stores data used and/or generated by operating system 712 and application programs 714 as application data 716. Examples of application data 716 include web pages, text, images, tables, sound files, video data, and other data. In examples, application data 716 is sent to and/or received from one or more network servers or other devices via one or more wired or wireless networks. Storage 720 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 702 through one or more input devices 730 and receives information from computing device 702 through one or more output devices 750. Input device(s) 730 includes one or more of touch screen 732, microphone 734, camera 736, physical keyboard 738 and/or trackball 740 and output device(s) 750 includes one or more of speaker 752 and display 754. Each of input device(s) 730 and output device(s) 750 are integral to computing device 702 (e.g., built into a housing of computing device 702) or are external to computing device 702 (e.g., communicatively coupled wired or wirelessly to computing device 702 via wired interface(s) 780 and/or wireless modem(s) 760). Further input devices 730 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 754 displays information, as well as operating as touch screen 732 by receiving user commands and/or other information (e.g., by touch, finger gestures, virtual keyboard, etc.) as a user interface. Any number of each type of input device(s) 730 and output device(s) 750 are present, including multiple microphones 734, multiple cameras 736, multiple speakers 752, and/or multiple displays 754.

In embodiments where GPU 742 is present, GPU 742 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 742 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 744 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 728. In an example, NPU 744 is configured for a data-driven parallel computing and is highly efficient at processing massive multimedia data such as videos and images and processing data for neural networks. NPU 744 is configured for efficient handling of AI-related tasks, such as speech recognition, background blurring in video calls, photo or video editing processes like object detection, etc.

In embodiments disclosed herein that implement ML models, NPU 744 can be utilized to execute such ML models, of which MLM 728 is an example. For instance, where applicable, MLM 728 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 744 is used to train MLM 728. To train MLM 728, training data is that includes input features (attributes) and their corresponding output labels/target values (e.g., for supervised learning) is collected. A training algorithm is a computational procedure that is used so that MLM 728 learns from the training data. Parameters/weights are internal settings of MLM 728 that are adjusted during training by the training algorithm to reduce a difference between predictions by MLM 728 and actual outcomes (e.g., output labels). In some examples, MLM 728 is set with initial values for the parameters/weights. A loss function measures a dissimilarity between predictions by MLM 728 and the target values, and the parameters/weights of MLM 728 are adjusted to minimize the loss function. The parameters/weights are iteratively adjusted by an optimization technique, such as gradient descent. In this manner, MLM 728 is generated through training by NPU 744 to be used to generate inferences based on received input feature sets for particular applications. MLM 728 is generated as a computer program or other type of algorithm configured to generate an output (e.g., a classification, a prediction/inference) based on received input features, and is stored in the form of a file or other data structure.

In examples, such training of MLM 728 by NPU 744 is supervised or unsupervised. According to supervised learning, input objects (e.g., a vector of predictor variables) and a desired output value (e.g., a human-labeled supervisory signal) train MLM 728. The training data is processed, building a function that maps new data on expected output values. Example algorithms usable by NPU 744 to perform supervised training of MLM 728 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 728 is an LLM, MLM 728 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 728 is trained to learn patterns from unlabeled data. For instance, in embodiments where MLM 728 implements unsupervised learning techniques, MLM 728 identifies one or more classifications or clusters to which an input belongs. During a training phase of MLM 728 according to unsupervised learning, MLM 728 tries to mimic the provided training data and uses the error in its mimicked output to correct itself (i.e., correct weights and biases). In further examples, NPU 744 perform unsupervised training of MLM 728 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 744 need not necessarily be present in all ML model embodiments. In embodiments where ML models are present, any one or more of processor 710, GPU 742, and/or NPU 744 can be present to train and/or execute MLM 728.

One or more wireless modems 760 can be coupled to antenna(s) (not shown) of computing device 702 and can support two-way communications between processor 710 and devices external to computing device 702 through network 704, as would be understood to persons skilled in the relevant art(s). Wireless modem 760 is shown generically and can include a cellular modem 766 for communicating with one or more cellular networks, such as a GSM network for data and voice communications within a single cellular network, between cellular networks, or between the mobile device and a public switched telephone network (PSTN). In examples, wireless modem 760 also or alternatively includes other radio-based modem types, such as a Bluetooth modem 764 (also referred to as a "Bluetooth device") and/or Wi-Fi modem 762 (also referred to as an "wireless adaptor"). Wi-Fi modem 762 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 764 is configured to communicate with another Bluetooth-capable device according to the Bluetooth short-range wireless technology standard(s) such as IEEE 802.15.1 and/or managed by the Bluetooth Special Interest Group (SIG).

Computing device 702 can further include power supply 782, LI receiver 784, accelerometer 786, and/or one or more wired interfaces 780. Example wired interfaces 780 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 780 of computing device 702 provide for wired connections between computing device 702 and network 704, or between computing device 702 and one or more devices/peripherals when such devices/peripherals are external to computing device 702 (e.g., a pointing device, display 754, speaker 752, camera 736, physical keyboard 738, etc.). Power supply 782 is configured to supply power to each of the components of computing device 702 and receives power from a battery internal to computing device 702, and/or from a power cord plugged into a power port of computing device 702 (e.g., a USB port, an A/C power port). LI receiver 784 is useable for location determination of computing device 702 and in examples includes a satellite navigation receiver such as a Global Positioning System (GPS) receiver and/or includes other type of location determiner configured to determine location of computing device 702 based on received information (e.g., using cell tower triangulation, etc.). Accelerometer 786, when present, is configured to determine an orientation of computing device 702.

Note that the illustrated components of computing device 702 are not required or all-inclusive, and fewer or greater numbers of components can be present as would be recognized by one skilled in the art. In examples, computing device 702 includes one or more of a gyroscope, barometer, proximity sensor, ambient light sensor, digital compass, etc. In an example, processor 710 and memory 756 are co-located in a same semiconductor device package, such as being included together in an integrated circuit chip, FPGA, or system-on-chip (SOC), optionally along with further components of computing device 702.

In embodiments, computing device 702 is configured to implement any of the above-described features of flowcharts herein. Computer program logic for performing any of the operations, steps, and/or functions described herein is stored in storage 720 and executed by processor 710.

In some embodiments, server infrastructure 770 is present in computing environment 700 and is communicatively coupled with computing device 702 via network 704. Server infrastructure 770, when present, is a network-accessible server set (e.g., a cloud-based environment or platform). As shown in FIG. 7, server infrastructure 770 includes clusters 772. Each of clusters 772 comprises a group of one or more compute nodes and/or a group of one or more storage nodes. For example, as shown in FIG. 7, cluster 772 includes nodes 774. Each of nodes 774 are accessible via network 704 (e.g., in a "cloud-based" embodiment) to build, deploy, and manage applications and services. In examples, any of nodes 774 is a storage node that comprises a plurality of physical storage disks, SSDs, and/or other physical storage devices that are accessible via network 704 and are configured to store data associated with the applications and services managed by nodes 774.

Each of nodes 774, as a compute node, comprises one or more server computers, server systems, and/or computing devices. For instance, a node 774 in accordance with an embodiment includes one or more of the components of computing device 702 disclosed herein. Each of nodes 774 is configured to execute one or more software applications (or "applications") and/or services and/or manage hardware resources (e.g., processors, memory, etc.), which are utilized by users (e.g., customers) of the network-accessible server set. In examples, as shown in FIG. 7, nodes 774 includes a node 746 that includes storage 748 and/or one or more of a processor 758 (e.g., similar to processor 710, GPU 742, and/or NPU 744 of computing device 702). Storage 748 stores application programs 776 and application data 778. Processor(s) 758 operate application programs 776 which access and/or generate related application data 778. In an implementation, nodes such as node 746 of nodes 774 operate or comprise one or more virtual machines, with each virtual machine emulating a system architecture (e.g., an operating system), in an isolated manner, upon which applications such as application programs 776 are executed.

In embodiments, one or more of clusters 772 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 772 are included in a datacenter in a distributed collection of datacenters. In embodiments, exemplary computing environment 700 comprises part of a cloud-based platform.

In an embodiment, computing device 702 accesses application programs 776 for execution in any manner, such as by a client application and/or a browser at computing device 702.

In an example, for purposes of network (e.g., cloud) backup and data security, computing device 702 additionally and/or alternatively synchronizes copies of application programs 714 and/or application data 716 to be stored at network-based server infrastructure 770 as application programs 776 and/or application data 778. In examples, operating system 712 and/or application programs 714 include a file hosting service client configured to synchronize applications and/or data stored in storage 720 at network-based server infrastructure 770.

In some embodiments, on-premises servers 792 are present in computing environment 700 and are communicatively coupled with computing device 702 via network 704. On-premises servers 792, when present, are hosted within an organization's infrastructure and, in many cases, physically onsite of a facility of that organization. On-premises servers 792 are controlled, administered, and maintained by IT (Information Technology) personnel of the organization or an IT partner to the organization. Application data 798 can be shared by on-premises servers 792 between computing devices of the organization, including computing device 702 (when part of an organization) through a local network of the organization, and/or through further networks accessible to the organization (including the Internet). Furthermore, in examples, on-premises servers 792 serve applications such as application programs 796 to the computing devices of the organization, including computing device 702. Accordingly, in examples, on-premises servers 792 include storage 794 (which includes one or more physical storage devices such as storage disks and/or SSDs) for storage of application programs 796 and application data 798 and include a processor 790 (e.g., similar to processor 710, GPU 742, and/or NPU 744 of computing device 702) for execution of application programs 796. In some embodiments, multiple processors 790 are present for execution of application programs 796 and/or for other purposes. In further examples, computing device 702 is configured to synchronize copies of application programs 714 and/or application data 716 for backup storage at on-premises servers 792 as application programs 796 and/or application data 798.

Embodiments described herein may be implemented in one or more of computing device 702, network-based server infrastructure 770, and on-premises servers 792. For example, in some embodiments, computing device 702 is used to implement systems, clients, or devices, or components/subcomponents thereof, disclosed elsewhere herein. In other embodiments, a combination of computing device 702, network-based server infrastructure 770, and/or on-premises servers 792 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 720. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 714) are stored in storage 720. Such computer programs can also be received via wired interface(s) 760 and/or wireless modem(s) 760 over network 704. Such computer programs, when executed or loaded by an application, enable computing device 702 to implement features of embodiments discussed herein. Accordingly, such computer programs represent controllers of the computing device 702.

Embodiments are also directed to computer program products comprising computer code or instructions stored on any computer-readable medium or computer-readable storage medium. Such computer program products include the physical storage of storage 720 as well as further physical storage types.

### IV. Additional Example Embodiments

In embodiments, a method performed by a verifier comprises: requesting, from a storage provider maintaining an append-only log storing a first log entry written by a first writer, verification of the first log entry, wherein the first log entry comprises first log data, a first signature and a first hash value; obtaining, from the storage provider, the first log entry and at least a portion of a second log entry preceding the first log entry to enable verification of the first log entry, wherein the second log entry comprises second log data, a second signature and a second hash value; and verifying, by the verifier, the first log entry.

In embodiments, verifying, by the verifier, the first log entry comprises: verifying the first signature based on the first log data, the first signature, a public key associated with the first writer, and at least one of the first hash value or the second hash value; generating a hash result by hashing, using a predetermined hash function, a concatenation comprising the first log data and at least one of the first signature or the second signature; and verifying the first hash value by comparing the hash result to the first hash value.

In embodiments, verifying, by the verifier, the first log entry comprises: determining a reference signature by signing, using a private key associated with the first writer, a concatenation of the first log data and at least one of the first hash value or the second hash value; comparing the reference signature to the first signature; generating a hash result by hashing, using a predetermined hash function, a concatenation comprising the first log data and at least one of the first signature or the second signature; and comparing the hash result to the first hash value.

In embodiments, verifying, by the verifier, the first log entry comprises: providing, to the first writer, a request to generate a cryptographic proof based at least on a private key associated with the first writer, a predetermined hash function, and the portion of the second log entry; receiving, from the first writer, the cryptographic proof; and verifying the cryptographic proof.

In embodiments, the method further comprises: selecting, based on a proof-of-storage protocol, a portion of the append-only log that, when verified, indicates a predetermined probability that the storage provider is in actual possession of the entire append-only log; obtaining, from the storage provider, log entries in the portion of the append-only log; and determining that the likelihood that the storage provider is in actual possession of the entire append-only log satisfies the predetermined probability by verifying the log entries in the portion of the append-only log.

In embodiments, the method further comprises: obtaining, from the append-only log, at least a portion of a last log entry stored in the append-only log, the last entry comprising last log data, a last signature, and a last hash value; determining a third log entry, the third log entry comprising third log data, a third signature, and a third hash value; and appending the third log entry to the append-only log by writing, to the append-only log, a tuple comprising the third log data, the third signature, and the third hash value, wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

In embodiments, the verifier comprises at least one of: the storage provider that maintains the append-only log; a writer of a log entry in the append-only log; or a third-party entity.

In embodiments, a system comprises: a processor; and a memory device that stores program code structured to cause the processor to: request, from a storage provider maintaining an append-only log storing a first log entry written by a first writer, verification of the first log entry, wherein the first log entry comprises first log data, a first signature and a first hash value; obtain, from the storage provider, the first log entry and at least a portion of a second log entry preceding the first log entry to enable verification of the first log entry, wherein the second log entry comprises second log data, a second signature and a second hash value; and verify the first log entry.

In embodiments, to verify the first log entry, the program code is structured to cause the processor to: the first signature based on the first log data, the first signature, a public key associated with the first writer, and at least one of the first hash value or the second hash value; generate a hash result by hashing, using a predetermined hash function, a concatenation comprising the first log data and at least one of the first signature or the second signature; and verify the first hash value by comparing the hash result to the first hash value.

In embodiments, to verify the first log entry, the program code is structured to cause the processor to: determine a reference signature by signing, using a private key associated with the first writer, a concatenation of the first log data and at least one of the first hash value or the second hash value; compare the reference signature to the first signature; generate a hash result by hashing, using a predetermined hash function, a concatenation comprising the first log data and at least one of the first signature or the second signature; and compare the hash result to the first hash value.

In embodiments, to verify the first log entry, the program code is structured to cause the processor to: provide, to the first writer, a request to generate a cryptographic proof based at least on a private key associated with the first writer, a predetermined hash function, and the portion of the second log entry; receive, from the first writer, the cryptographic proof; and verify the cryptographic proof.

In embodiments, the program code is structured to further cause the processor to: select, based on a proof-of-storage protocol, a portion of the append-only log that, when verified, indicates a predetermined probability that the storage provider is in actual possession of the entire append-only log; obtain, from the storage provider, log entries in the portion of the append-only log; and determine that the likelihood that the storage provider is in actual possession of the entire append-only log satisfies the predetermined probability by verifying the log entries in the portion of the append-only log.

In embodiments, the program code is structured to further cause the processor to: obtain, from the append-only log, at least a portion of a last log entry stored in the append-only log, the last entry comprising last log data, a last signature, and a last hash value; determine a third log entry, the third log entry comprising third log data, a third signature, and a third hash value; and append the third log entry to the append-only log by writing, to the append-only log, a tuple comprising the third log data, the third signature, and the third hash value, wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

In embodiments, to request, from a storage provider maintaining an append-only log storing a first log entry written by a first writer, verification of the first log entry, the program code is structured to cause the processor to perform at least one of: request verification of the first log entry on-demand; request verification of the first log entry periodically; or request verification of the first log entry responsive to a trigger.

In embodiments, a computer-readable storage medium comprises executable instructions that, when executed by a processor, cause the processor to: request, from a storage provider maintaining an append-only log storing a first log entry written by a first writer, verification of the first log entry, wherein the first log entry comprises first log data, a first signature and a first hash value; obtain, from the storage provider, the first log entry and at least a portion of a second log entry preceding the first log entry to enable verification of the first log entry, wherein the second log entry comprises second log data, a second signature and a second hash value; and verify the first log entry.

In embodiments, to verify the first log entry, the executable instructions, when executed by the processor, further cause the processor to: verify the first signature based on the first log data, the first signature, a public key associated with the first writer, and at least one of the first hash value or the second hash value; generate a hash result by hashing, using a predetermined hash function, a concatenation comprising the first log data and at least one of the first signature or the second signature; and verify the first hash value by comparing the hash result to the first hash value.

In embodiments, to verify the first log entry, the executable instructions, when executed by the processor, further cause the processor to: determine a reference signature by signing, using a private key associated with the first writer, a concatenation of the first log data and at least one of the first hash value or the second hash value; compare the reference signature to the first signature; generate a hash result by hashing, using a predetermined hash function, a concatenation comprising the first log data and at least one of the first signature or the second signature; and compare the hash result to the first hash value.

In embodiments, to verify the first log entry, the executable instructions, when executed by the processor, further cause the processor to: provide, to the first writer, a request to generate a cryptographic proof based at least on a private key associated with the first writer, a predetermined hash function, and the portion of the second log entry; receive, from the first writer, the cryptographic proof; and verify the cryptographic proof.

In embodiments, the executable instructions, when executed by the processor, further cause the processor to: select, based on a proof-of-storage protocol, a portion of the append-only log that, when verified, indicates a predetermined probability that the storage provider is in actual possession of the entire append-only log; obtain, from the storage provider, log entries in the portion of the append-only log; and determine that the likelihood that the storage provider is in actual possession of the entire append-only log satisfies the predetermined probability by verifying the log entries in the portion of the append-only log.

the executable instructions, when executed by the processor, further cause the processor to: obtain, from the append-only log, at least a portion of a last log entry stored in the append-only log, the last entry comprising last log data, a last signature, and a last hash value; determine a third log entry, the third log entry comprising third log data, a third signature, and a third hash value; and append the third log entry to the append-only log by writing, to the append-only log, a tuple comprising the third log data, the third signature, and the third hash value, wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

While various embodiments of the present disclosure have been described above, it should be understood that they have been presented by way of example only, and not limitation. It will be understood by those skilled in the relevant art(s) that various changes in form and details may be made therein without departing from the spirit and scope of the invention as defined in the appended claims. Accordingly, the breadth and scope of the present invention should not be limited by any of the above-described exemplary embodiments, but should be defined only in accordance with the following claims and their equivalents.

### The following is a list of further preferred embodiments of the invention:

Embodiment 1. A method performed by a verifier, the method comprising:
requesting, from a storage provider maintaining an append-only log storing a first log entry written by a first writer, verification of the first log entry, wherein the first log entry comprises first log data, a first signature and a first hash value;
obtaining, from the storage provider, the first log entry and at least a portion of a second log entry preceding the first log entry to enable verification of the first log entry, wherein the second log entry comprises second log data, a second signature and a second hash value; and
verifying, by the verifier, the first log entry.

Embodiment 2. The method of embodiment 1, wherein said verifying, by the verifier, the first log entry comprises:
verifying the first signature based on the first log data, the first signature, a public key associated with the first writer, and at least one of the first hash value or the second hash value;
generating a hash result by hashing, using a predetermined hash function, a concatenation comprising the first log data and at least one of the first signature or the second signature; and
verifying the first hash value by comparing the hash result to the first hash value.

Embodiment 3. The method of embodiment 1, wherein said verifying, by the verifier, the first log entry comprises:
determining a reference signature by signing, using a private key associated with the first writer, a concatenation of the first log data and at least one of the first hash value or the second hash value;
comparing the reference signature to the first signature;
generating a hash result by hashing, using a predetermined hash function, a concatenation comprising the first log data and at least one of the first signature or the second signature; and
comparing the hash result to the first hash value.

Embodiment 4. The method of embodiment 1, wherein said verifying, by the verifier, the first log entry comprises:
providing, to the first writer, a request to generate a cryptographic proof based at least on a private key associated with the first writer, a predetermined hash function, and the portion of the second log entry;
receiving, from the first writer, the cryptographic proof; and
verifying the cryptographic proof.

Embodiment 5. The method of embodiment 1, further comprising:
selecting, based on a proof-of-storage protocol, a portion of the append-only log that, when verified, indicates a predetermined probability that the storage provider is in actual possession of the entire append-only log;
   obtaining, from the storage provider, log entries in the portion of the append-only log; and
determining that the likelihood that the storage provider is in actual possession of the entire append-only log satisfies the predetermined probability by verifying the log entries in the portion of the append-only log.

Embodiment 6. The method of embodiment 1, further comprising:
obtaining, from the append-only log, at least a portion of a last log entry stored in the append-only log, the last entry comprising last log data, a last signature, and a last hash value;
determining a third log entry, the third log entry comprising third log data, a third signature, and a third hash value; and
appending the third log entry to the append-only log by writing, to the append-only log, a tuple comprising the third log data, the third signature, and the third hash value,
wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

Embodiment 7. The method of embodiment 1, wherein the verifier comprises at least one of:
the storage provider that maintains the append-only log;
a writer of a log entry in the append-only log; or
a third-party entity.

Embodiment 8. A system comprising:
a processor; and
a memory device that stores program code structured to cause the processor to:
   request, from a storage provider maintaining an append-only log storing a first log entry written by a first writer, verification of the first log entry, wherein the first log entry comprises first log data, a first signature and a first hash value;
   obtain, from the storage provider, the first log entry and at least a portion of a second log entry preceding the first log entry to enable verification of the first log entry, wherein the second log entry comprises second log data, a second signature and a second hash value; and
   verify the first log entry.

Embodiment 9. The system of embodiment 8, wherein, to verify the first log entry, the program code is structured to cause the processor to
verify the first signature based on the first log data, the first signature, a public key associated with the first writer, and at least one of the first hash value or the second hash value;
generate a hash result by hashing, using a predetermined hash function, a concatenation comprising the first log data and at least one of the first signature or the second signature; and
verify the first hash value by comparing the hash result to the first hash value.

Embodiment 10. The system of embodiment 8, wherein, to verify the first log entry, the program code is structured to cause the processor to:
determine a reference signature by signing, using a private key associated with the first writer, a concatenation of the first log data and at least one of the first hash value or the second hash value;
compare the reference signature to the first signature;
generate a hash result by hashing, using a predetermined hash function, a concatenation comprising the first log data and at least one of the first signature or the second signature; and
compare the hash result to the first hash value.

Embodiment 11. The system of embodiment 8, wherein, to verify the first log entry, the program code is structured to cause the processor to:
provide, to the first writer, a request to generate a cryptographic proof based at least on a private key associated with the first writer, a predetermined hash function, and the portion of the second log entry;
receive, from the first writer, the cryptographic proof; and
verify the cryptographic proof.

Embodiment 12. The system of embodiment 8, wherein the program code is structured to further cause the processor to:
select, based on a proof-of-storage protocol, a portion of the append-only log that, when verified, indicates a predetermined probability that the storage provider is in actual possession of the entire append-only log;
obtain, from the storage provider, log entries in the portion of the append-only log; and
determine that the likelihood that the storage provider is in actual possession of the entire append-only log satisfies the predetermined probability by verifying the log entries in the portion of the append-only log.

Embodiment 13. The system of embodiment 8, wherein the program code is structured to further cause the processor to:
obtain, from the append-only log, at least a portion of a last log entry stored in the append-only log, the last entry comprising last log data, a last signature, and a last hash value;
determine a third log entry, the third log entry comprising third log data, a third signature, and a third hash value; and
append the third log entry to the append-only log by writing, to the append-only log, a tuple comprising the third log data, the third signature, and the third hash value,
wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

Embodiment 14. The system of embodiment 8, wherein, to request, from a storage provider maintaining an append-only log storing a first log entry written by a first writer, verification of the first log entry, the program code is structured to cause the processor to perform at least one of:
request verification of the first log entry on-demand;
request verification of the first log entry periodically; or
request verification of the first log entry responsive to a trigger.

Embodiment 15. A computer-readable storage medium comprising executable instructions that, when executed by a processor, cause the processor to:
request, from a storage provider maintaining an append-only log storing a first log entry written by a first writer, verification of the first log entry, wherein the first log entry comprises first log data, a first signature and a first hash value;
obtain, from the storage provider, the first log entry and at least a portion of a second log entry preceding the first log entry to enable verification of the first log entry, wherein the second log entry comprises second log data, a second signature and a second hash value; and
verify the first log entry.

Embodiment 16. The computer-readable storage medium of embodiment 15, wherein, to verify the first log entry, the executable instructions, when executed by the processor, further cause the processor to:
verify the first signature based on the first log data, the first signature, a public key associated with the first writer, and at least one of the first hash value or the second hash value;
generate a hash result by hashing, using a predetermined hash function, a concatenation comprising the first log data and at least one of the first signature or the second signature; and
verify the first hash value by comparing the hash result to the first hash value.

Embodiment 17. The computer-readable storage medium of embodiment 15, wherein, to verify the first log entry, the executable instructions, when executed by the processor, further cause the processor to:
determine a reference signature by signing, using a private key associated with the first writer, a concatenation of the first log data and at least one of the first hash value or the second hash value;
compare the reference signature to the first signature;
generate a hash result by hashing, using a predetermined hash function, a concatenation comprising the first log data and at least one of the first signature or the second signature; and
compare the hash result to the first hash value.

Embodiment 18. The computer-readable storage medium of embodiment 15, wherein, to verify the first log entry, the executable instructions, when executed by the processor, further cause the processor to:
provide, to the first writer, a request to generate a cryptographic proof based at least on a private key associated with the first writer, a predetermined hash function, and the portion of the second log entry;
receive, from the first writer, the cryptographic proof; and
verify the cryptographic proof.

Embodiment 19. The computer-readable storage medium of embodiment 15, wherein the executable instructions, when executed by the processor, further cause the processor to:
select, based on a proof-of-storage protocol, a portion of the append-only log that, when verified, indicates a predetermined probability that the storage provider is in actual possession of the entire append-only log;
obtain, from the storage provider, log entries in the portion of the append-only log; and
determine that the likelihood that the storage provider is in actual possession of the entire append-only log satisfies the predetermined probability by verifying the log entries in the portion of the append-only log.

Embodiment 20. The computer-readable storage medium of embodiment 15, wherein the executable instructions, when executed by the processor, further cause the processor to:
obtain, from the append-only log, at least a portion of a last log entry stored in the append-only log, the last entry comprising last log data, a last signature, and a last hash value;
determine a third log entry, the third log entry comprising third log data, a third signature, and a third hash value; and
append the third log entry to the append-only log by writing, to the append-only log, a tuple comprising the third log data, the third signature, and the third hash value,
wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

## Claims

1. A method performed by a verifier, the method comprising:
requesting, from a storage provider maintaining an append-only log storing a first log entry written by a first writer, verification of the first log entry, wherein the first log entry comprises first log data, a first signature and a first hash value;
obtaining, from the storage provider, the first log entry and at least a portion of a second log entry preceding the first log entry to enable verification of the first log entry, wherein the second log entry comprises second log data, a second signature and a second hash value; and
verifying, by the verifier, the first log entry.

2. The method of claim 1, wherein said verifying, by the verifier, the first log entry comprises:
verifying the first signature based on the first log data, the first signature, a public key associated with the first writer, and at least one of the first hash value or the second hash value;
generating a hash result by hashing, using a predetermined hash function, a concatenation comprising the first log data and at least one of the first signature or the second signature; and
verifying the first hash value by comparing the hash result to the first hash value.

3. The method of claim 1 or 2, wherein said verifying, by the verifier, the first log entry comprises:
determining a reference signature by signing, using a private key associated with the first writer, a concatenation of the first log data and at least one of the first hash value or the second hash value;
comparing the reference signature to the first signature;
generating a hash result by hashing, using a predetermined hash function, a concatenation comprising the first log data and at least one of the first signature or the second signature; and
comparing the hash result to the first hash value.

4. The method of one of claims 1 to 3, wherein said verifying, by the verifier, the first log entry comprises:
providing, to the first writer, a request to generate a cryptographic proof based at least on a private key associated with the first writer, a predetermined hash function, and the portion of the second log entry;
receiving, from the first writer, the cryptographic proof; and
verifying the cryptographic proof.

5. The method of one of claims 1 to 4, further comprising:
selecting, based on a proof-of-storage protocol, a portion of the append-only log that, when verified, indicates a predetermined probability that the storage provider is in actual possession of the entire append-only log;
obtaining, from the storage provider, log entries in the portion of the append-only log; and
determining that the likelihood that the storage provider is in actual possession of the entire append-only log satisfies the predetermined probability by verifying the log entries in the portion of the append-only log.

6. The method of one of claims 1 to 5, further comprising:
obtaining, from the append-only log, at least a portion of a last log entry stored in the append-only log, the last entry comprising last log data, a last signature, and a last hash value;
determining a third log entry, the third log entry comprising third log data, a third signature, and a third hash value; and
appending the third log entry to the append-only log by writing, to the append-only log, a tuple comprising the third log data, the third signature, and the third hash value,
wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.

7. The method of one of claims 1 to 6, wherein the verifier comprises at least one of:
the storage provider that maintains the append-only log;
a writer of a log entry in the append-only log; or
a third-party entity.

8. A system comprising:
a processor; and
a memory device that stores program code structured to cause the processor to:
request, from a storage provider maintaining an append-only log storing a first log entry written by a first writer, verification of the first log entry, wherein the first log entry comprises first log data, a first signature and a first hash value;
obtain, from the storage provider, the first log entry and at least a portion of a second log entry preceding the first log entry to enable verification of the first log entry, wherein the second log entry comprises second log data, a second signature and a second hash value; and
verify the first log entry.

9. The system of claim 8, wherein, to verify the first log entry, the program code is structured to cause the processor to:
verify the first signature based on the first log data, the first signature, a public key associated with the first writer, and at least one of the first hash value or the second hash value;
generate a hash result by hashing, using a predetermined hash function, a concatenation comprising the first log data and at least one of the first signature or the second signature; and
verify the first hash value by comparing the hash result to the first hash value.

10. The system of claim 8, wherein, to verify the first log entry, the program code is structured to cause the processor to:
determine a reference signature by signing, using a private key associated with the first writer, a concatenation of the first log data and at least one of the first hash value or the second hash value;
compare the reference signature to the first signature;
generate a hash result by hashing, using a predetermined hash function, a concatenation comprising the first log data and at least one of the first signature or the second signature; and
compare the hash result to the first hash value.

11. The system of claim 8 or 9 wherein, to verify the first log entry, the program code is structured to cause the processor to:
provide, to the first writer, a request to generate a cryptographic proof based at least on a private key associated with the first writer, a predetermined hash function, and the portion of the second log entry;
receive, from the first writer, the cryptographic proof; and
verify the cryptographic proof.

12. The system of one of claims 8 to 11, wherein the program code is structured to further cause the processor to:
select, based on a proof-of-storage protocol, a portion of the append-only log that, when verified, indicates a predetermined probability that the storage provider is in actual possession of the entire append-only log;
obtain, from the storage provider, log entries in the portion of the append-only log; and
determine that the likelihood that the storage provider is in actual possession of the entire append-only log satisfies the predetermined probability by verifying the log entries in the portion of the append-only log.

13. The system of one of claims 8 to 12, wherein the program code is structured to further cause the processor to:
obtain, from the append-only log, at least a portion of a last log entry stored in the append-only log, the last entry comprising last log data, a last signature, and a last hash value;
determine a third log entry, the third log entry comprising third log data, a third signature, and a third hash value; and
append the third log entry to the append-only log by writing, to the append-only log, a tuple comprising the third log data, the third signature, and the third hash value,
wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry; or
wherein, to request, from a storage provider maintaining an append-only log storing a first log entry written by a first writer, verification of the first log entry, the program code is structured to cause the processor to perform at least one of:
request verification of the first log entry on-demand;
request verification of the first log entry periodically; or
request verification of the first log entry responsive to a trigger.

14. A computer-readable storage medium comprising executable instructions that, when executed by a processor, cause the processor to:
request, from a storage provider maintaining an append-only log storing a first log entry written by a first writer, verification of the first log entry, wherein the first log entry comprises first log data, a first signature and a first hash value;
obtain, from the storage provider, the first log entry and at least a portion of a second log entry preceding the first log entry to enable verification of the first log entry, wherein the second log entry comprises second log data, a second signature and a second hash value; and
verify the first log entry.

15. The computer-readable storage medium of claim 14, wherein, to verify the first log entry, the executable instructions, when executed by the processor, further cause the processor to:
verify the first signature based on the first log data, the first signature, a public key associated with the first writer, and at least one of the first hash value or the second hash value;
generate a hash result by hashing, using a predetermined hash function, a concatenation comprising the first log data and at least one of the first signature or the second signature; and
verify the first hash value by comparing the hash result to the first hash value; or
wherein, to verify the first log entry, the executable instructions, when executed by the processor, further cause the processor to:
determine a reference signature by signing, using a private key associated with the first writer, a concatenation of the first log data and at least one of the first hash value or the second hash value;
compare the reference signature to the first signature;
generate a hash result by hashing, using a predetermined hash function, a concatenation comprising the first log data and at least one of the first signature or the second signature; and
compare the hash result to the first hash value; or
wherein, to verify the first log entry, the executable instructions, when executed by the processor, further cause the processor to:
provide, to the first writer, a request to generate a cryptographic proof based at least on a private key associated with the first writer, a predetermined hash function, and the portion of the second log entry;
receive, from the first writer, the cryptographic proof; and
verify the cryptographic proof; or
wherein the executable instructions, when executed by the processor, further cause the processor to:
select, based on a proof-of-storage protocol, a portion of the append-only log that, when verified, indicates a predetermined probability that the storage provider is in actual possession of the entire append-only log;
obtain, from the storage provider, log entries in the portion of the append-only log; and
determine that the likelihood that the storage provider is in actual possession of the entire append-only log satisfies the predetermined probability by verifying the log entries in the portion of the append-only log; or
wherein the executable instructions, when executed by the processor, further cause the processor to:
obtain, from the append-only log, at least a portion of a last log entry stored in the append-only log, the last entry comprising last log data, a last signature, and a last hash value;
determine a third log entry, the third log entry comprising third log data, a third signature, and a third hash value; and
append the third log entry to the append-only log by writing, to the append-only log, a tuple comprising the third log data, the third signature, and the third hash value,
wherein the third signature is determined by signing, using a private key associated with a third writer of the third log entry, a concatenation comprising the third log data and at least one of the third hash value or a hash value associated with the last log entry, and the third hash value is determined by hashing, using a predetermined hash function, a concatenation comprising the third log data and at least one of the third signature or a signature associated with the last log entry.
